# EUROPEAN PATENT APPLICATION

(11) **EP 3 840 167 A1**
(43) Date of publication of application: **23.06.2021**
(21) Application number: 19383124.5
(22) Date of filing: 17.12.2019
(51) Int. Cl.: H02J 7/00, H02J 7/02, B64F 5/10, B64F 5/40, H02M 7/00, H02M 1/00

(54) **POWER SUPPLY UNITS FOR AIRCRAFTS**

(71) Applicant: Airbus Defence and Space, S.A.U., 28906 Getafe - Madrid (ES)
(72) Inventor: ALVAREZ SIERRAS, Miguel, Angel, 28906 GETAFE (Madrid) (ES); PASCUAL GARCIA, Antonio, 28906 GETAFE (Madrid) (ES)
(74) Representative: Herrero & Asociados, S.L.

(57) **Abstract**

A portable DC power supply (100) for an aircraft (145), the power supply comprising an AC to DC converter (110), an input power connector (120) adapted to connect the AC to DC converter to an AC plug (130) and one or more removable wiring harnesses (140), wherein the power supply (100) provides a voltage via the one or more removable wiring harnesses (140) to the aircraft (145) according to the Electrical Design Directive, EDD.

## Description

### Object of the invention

The present invention refers to power supply units of Direct Current (DC) to aircraft battery systems.

Particularly, the object of the present invention is to provide a portable DC power supply unit to the aircraft that can be used as a power source external to the aircraft and permit saving battery life cycles of the aircraft battery system.

### Background of the invention

Aircrafts utilize battery systems, which may include one or more batteries that may be used to DC power electrical equipment in the aircraft or cover uncontrolled power cut from aircraft Alternating Current (AC) to DC converters, for example batteries can be used during maintenance task without using Ground Power Unit (GPU) and without starting up the engines, an example of this maintenance tasks could be refuel on bat, circuit breakers (C/B) configuration and monitoring, power the emergency break during aircraft taxiing operations...

Batteries of Electrical Generation aircraft subsystem require maintenance and suffer degradation during its use. Typically, these batteries are recharged by AC/DC converters during aircraft power or through GPU or Variable Frequency Generator (VFG) when engines are started up. The batteries of current aircraft are generally configured in a limited number of different basic designs depending upon the size of the aircraft and the battery manufacturer. In many cases, for a given power requirement, batteries are a given size and shape that may restrict their uses and types of operations.

The portable power supply according to the present invention can adapt to the different types of aircraft DC batteries being able to provide DC power to aircraft DC batteries used in electrical equipment in the aircraft. Hence, avoiding degradation of the conventional aircraft batteries used to conventionally provide DC power to said electrical equipment and hence, improving the lifetime of the aircraft batteries.

Furthermore, the portable DC power supply may comprise at least one battery. When an AC source cannot be provided to the portable DC power supply for AC to DC conversion, the portable DC power supply can be used as an external battery that can power the aircraft with stored DC power. This can be useful in e.g. aircraft maintenance, aircraft manufacturing, taxiing operations. The portable DC power supply battery may be charged through the AC/DC converter when the AC/DC converter is connected to AC power supply.

### Description of the invention

The power supply unit according to the present invention can supply DC power to the aircraft. In particular, the power supply unit can supply DC power to the aircraft during e.g. manufacturing of the aircraft and/or during maintenance of the aircraft. Hence, the power supply unit may be used to supply DC power to the aircraft in substitution of DC aircraft batteries for at least the mentioned purposes.

Furthermore, the power supply unit according to the present invention can supply DC power to the aircraft electrical equipment without using the electric power stored in the aircraft batteries, hence increasing the aircraft batteries lifetime. Hence, this portable power supply unit permits the aircraft to operate with full capabilities and advantageously saving the degradation that suffer the proper aircraft batteries during their use and hence, provide power to the aircraft during manufacturing and/or maintenance of the aircraft in substitution of aircraft batteries. Hence, the use of aircraft battery life cycles may not be required during maintenance tasks when using the power supply unit. Furthermore, the aircraft battery units on Final Production Lines (FAL) can be reduced using the proposed portable power supply unit. Additionally, the power supply unit can be used in Maintenance Repair and Overhaul (MRO) tasks. For all aircrafts, the voltage output of batteries has to fulfill the Electrical Design Directive (EDD) where the characteristics of aircraft AC and DC systems adhering to a given aircraft voltage standard and voltage regulation are defined.

Hence, a first aspect of the present invention is to provide a portable DC power supply for an aircraft, the power supply comprises an AC to DC converter. Furthermore, the portable DC power supply comprises an input power connector adapted to connect the AC to DC converter to a standard AC plug, e.g. a domestic AC plug. Hence, the power supply may convert domestic AC (230VAC) to DC according to the EDD being able to provide the aircraft with a DC power supply.

Furthermore, the portable DC power supply comprises one or more wiring harnesses adapted to connect the AC to DC converter to aircraft DC batteries. A wiring harness can be used for each aircraft battery of the aircraft battery system to distribute the current from the AC to DC converter to the aircraft DC batteries. The wiring harnesses can be removable enhancing the portability of the DC power supply.

The portable DC power supply can comprise one or more battery connectors adapted to connect the one or more wiring harnesses to the aircraft DC battery connectors. They can be standard connectors or equivalent.

The portable DC power supply may be used to charge on-board batteries of the aircraft. The aircraft batteries may thus be charged, for example after manufacturing, after a maintenance period, or during ground operations of the aircraft, such that the aircraft may have fully charged batteries at first take-off after such period.

The portable DC power supply may comprise at least one connector to be connected directly to a power distribution network of the aircraft. This may allow to bypass completely the aircraft batteries, thereby sparing their use and increasing their lifetime.

Hence, several harnesses can be provided in order to connect the portable DC power supply with any aircraft DC battery connector. The battery connectors of the portable DC power supply can comprise power supply connectors for supplying power to the aircraft DC batteries and signal connectors for monitoring/command between the power supply system and the aircraft.

The portable DC power supply can be used for on ground aircraft operations and could be installed inside the aircraft during operations or installed outside the aircraft and routing the harnesses into the aircraft, depending on the type of operation and aircraft environment.

Furthermore, the power supply provides a DC power suitable for the DC aircraft means. In this respect and by way of example, it may be desired or required by EDD that the voltage output of an aircraft battery complies with the "28-volt standard", but during eventually issues the voltage output could be between 22 volts and 29 volts but always being able to supply an intensity of 150A.

### Brief description of the drawings

For a better understanding the above explanation and for the sole purpose of providing an example, some non-limiting drawings are included that schematically depict a practical embodiment.
Figure 1 shows a schematic representation of a portable power supply according to the present invention supplying power to an aircraft.
Figure 2 shows a schematic representation of a portable power supply according to the present invention supplying power to aircraft batteries.

### Description of a preferred embodiment

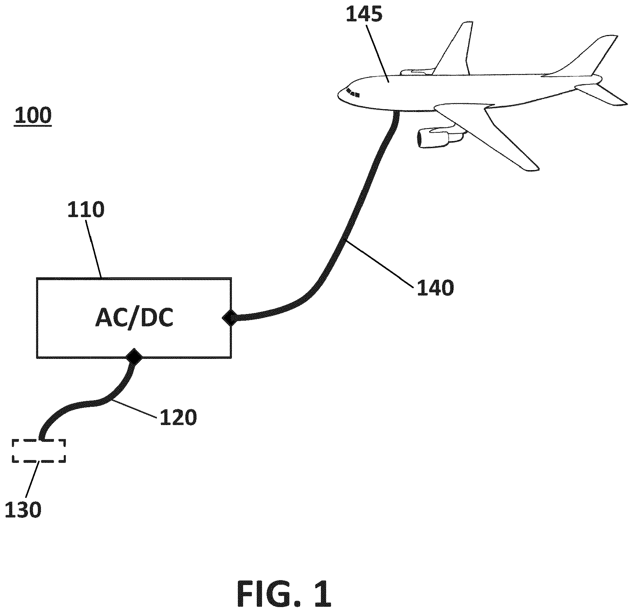

Figure 1 shows an example of a portable DC power supply (100) for an aircraft, the power supply (100) comprises an AC to DC converter (110), a power connector (120) that permits to connect the AC to DC converter (110) to an AC plug, particularly, a domestic AC plug (130) and one removable wiring harness (140) adapted to connect the AC to DC converter (110) to the aircraft (145). The number of wiring harnesses (140) can vary depending on the number of aircraft systems or equipment supplied with DC power by the portable DC power supply (100).

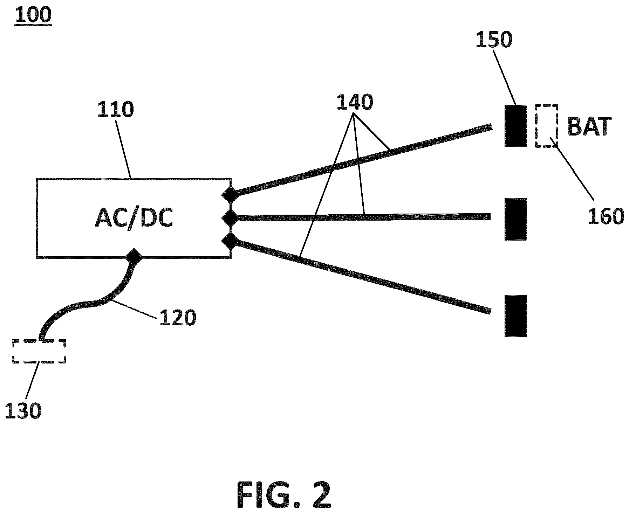

Figure 2 shows the portable DC power supply (100) for an aircraft, the power supply (100) comprises the AC to DC converter (110), the power connector (120) that permits to connect the AC to DC converter (110) to an AC plug, particularly, a domestic AC plug (130) and three removable wiring harnesses (140) adapted to connect the AC to DC converter (110) to the three aircraft DC batteries via battery connectors (150) and aircraft DC battery connectors (160) as part of the three aircraft DC batteries. The number of wiring harnesses (140) can vary depending on the number of batteries or power circuits used by the aircraft, and thus, making the number of wiring harnesses (140) of the portable DC power supply (100) customizable depending on the amount of batteries. Particularly, figure 2 shows three battery connectors (150) adapted to connect the three wiring harnesses to the aircraft DC battery connectors (160) of the aircraft DC batteries of the aircraft (145).

In this example, the power supplied by the AC to DC converter (110) to the aircraft batteries comprises a 28VDC voltage and a maximum intensity of 150A.

For supplying power to the aircraft emergency brake during taxiing operations when an AC source cannot be provided to the power supply (100) for AC to DC conversion, the portable DC power supply (100) can provide stored DC power to the aircraft (145). Hence, the portable DC power supply (110) can be used as an external battery storing DC power that can be supplied to the system brake in the aircraft (145) for taxiing operations. The portable DC power supply (100) functioning as an external battery can be charged anytime by connecting the portable DC power supply (100) to an AC source via the AC to DC converter (110). Thus, the portable DC power supply (100) can ensure a safe taxiing aircraft operation when an AC source cannot be found or provided and in substitution of aircraft DC batteries. The requirements of the emergency break (i.e. 28VDC and 1A) can be fulfilled by the portable DC power supply (110).

Other situations wherein an AC source cannot be provided to the portable DC power supply (100) for AC to DC conversion and the portable DC power supply (100) can be used as an external battery can be e.g. aircraft maintenance or aircraft manufacturing. In those situations, an AC source may not be provided and/or the aircraft DC batteries may not be yet established, or they may be kept from being used for lifetime purposes.

Furthermore, the portable DC power supply (100) comprises a touch screen/monitor for manual operation of the portable DC power supply (100). Also being able to connect to a wireless network to be managed by an external device as smartphone or tablet, being ready to be part of a network of Internet of things (loT).

Through the touch screen or by e.g. a smartphone connected by WiFi to the portable DC power supply (100) that permits remote control of the DC power supply (100), the commands available can comprise "power on" and "power off" of the portable DC power supply (100) and the status of control signals. The touch screen/monitor can show e.g. intensity demanded by the aircraft and voltage in the output of the aircraft means.

Furthermore, the portable DC power supply (100) can comprise carrying means as a trolley to carry the AC to DC converter (110). Moreover, the portable DC power supply (100) has been designed to be modular as the elements of the portable DC power supply (100) can be stored or transported separately. In this regard, the AC to DC converter (110) can be stored on a rack being able to easy exchange for another DC converter in case of different necessities required by a different aircraft.

Even though reference has been made to a specific embodiment of the invention, it is obvious for a person skilled in the art that the power supplies described herein are susceptible to numerous variations and modifications, and that all the details mentioned can be substituted for other technically equivalent ones without departing from the scope of protection defined by the attached claims.

## Claims

1. A portable DC power supply (100) for an aircraft (145), the power supply comprising:
- an AC to DC converter (110);
- an input power connector (120) adapted to connect the AC to DC converter to an AC plug (130); and
- one or more removable wiring harnesses (140),
wherein the power supply (100) provides a voltage via the one or more removable wiring harnesses (140) to the aircraft (145) according to the Electrical Design Directive, EDD.

2. The portable DC power supply (100) for an aircraft (145) according to claim 1, wherein the one or more removable wiring harnesses (140) comprise one or more aircraft battery connectors (150) adapted to connect the one or more wiring harnesses (140) to aircraft DC batteries connectors (160) of aircraft DC batteries of the aircraft (145).

3. The portable DC power supply (100) for an aircraft (145) according to claim 2, wherein the one or more battery connectors (150) comprise power supply connectors and signal connectors.

4. The portable DC power supply (100) for an aircraft (145) according to any of the preceding claims, further comprising a touch screen.

5. The portable DC power supply (100) for an aircraft (145) according to any of the preceding claims, further comprising carrying means.

6. The portable DC power supply (100) for an aircraft (145) according to any of the preceding claims, further comprising computing and wireless networking means.

7. The portable DC power supply (100) for an aircraft (145) according to claims 2 to 5, wherein the voltage to the aircraft DC batteries according to the EDD is between 22VDC and 29VDC.

8. The portable DC power supply (100) for an aircraft (145) according to claims 2 to 5, wherein the voltage to the aircraft DC batteries according to the EDD is 28VDC.

9. The use of the portable power DC supply (100) for an aircraft (145) according to claims 1 to 8 inside of the aircraft.

10. The use of the portable power DC supply (100) for an aircraft (145) according to claims 1 to 8 outside of the aircraft.

11. The use of the portable power DC supply (100) for an aircraft (145) according to claims 1 to 8 during aircraft manufacturing.

12. The use of the portable power DC supply (100) for an aircraft (145) according to claims 1 to 8 during aircraft maintenance.

13. The use of the portable power DC supply (100) for an aircraft (145) according to claims 1 to 8 as an external DC battery.
